# EUROPEAN PATENT APPLICATION

(11) **EP 4 730 704 A1**
(43) Date of publication of application: **22.04.2026**
(21) Application number: 24822682.1
(22) Date of filing: 11.06.2024
(51) Int. Cl.: H04L 9/40, H04L 9/00, H04L 9/32, G06F 21/57

(54) **SECURITY EVALUATION METHOD, SERVICE PROCESSING METHOD, SECURITY INFORMATION TRANSMISSION METHOD AND RELATED DEVICE**

(30) Priority: 15.06.2023 CN 202310715581
(71) Applicant: Vivo Mobile Communication Co., Ltd., Dongguan, Guangdong 523863 (CN)
(72) Inventor: HU, Zhiyuan, Dongguan, Guangdong 523863 (CN); HE, Wendeng, Dongguan, Guangdong 523863 (CN)
(74) Representative: Lavoix
(86) International application number: PCT/CN2024/098430
(87) International publication number: WO 2024/255732

(57) **Abstract**

This application provides a security evaluation method, a service processing method, a security information transmission method, and a related device, and relates to the field of communication technologies. The method includes: determining a target security evaluation result based on first security information in a case that a security evaluation request sent by an application server is received, where the first security information includes security status information of an REE of an electronic device or a security evaluation result of the REE; decrypting a first ciphertext by using a root key of the electronic device, to obtain a private key of the electronic device, where the first ciphertext is a ciphertext obtained by a security coprocessor by encrypting the private key of the electronic device by using the root key of the electronic device; signing the target security evaluation result by using the private key of the electronic device, to obtain a signature of the target security evaluation result; and sending second security information to the application server, where the second security information includes the target security evaluation result and the signature of the target security evaluation result.

## Description

### CROSS-REFERENCE TO RELATED APPLICATIONS

This application claims priority to Chinese Patent Application No. 202310715581.6, filed in China on June 15, 2023, which is incorporated herein by reference in its entirety.

### TECHNICAL FIELD

This application relates to the field of communication technologies, and in particular, to a security evaluation method, a service processing method, a security information transmission method, and a related device.

### BACKGROUND

Before providing services to users, providers of application services (for example, mobile payment, mobile banking, and financial services) usually need to perform security evaluation on electronic devices, and only allow them to access the services in a case that the electronic devices are determined as secure and trustworthy devices based on security evaluation results. Specifically, an application server sends a security evaluation request to an electronic device, and the electronic device obtains security status information of a rich execution environment (REE) based on the security evaluation request and performs security evaluation, to obtain a security evaluation result of the REE, and returns the security evaluation result to the application server. Further, the application server may determine, based on the security evaluation result, whether to allow the electronic device to access a service that is applied for access. However, reliability of this security evaluation manner is poor.

### SUMMARY

Embodiments of this application provide a security evaluation method, a service processing method, a security information transmission method, and a related device, so that reliability of a security evaluation result of an electronic device can be improved.

According to a first aspect, an embodiment of this application provides a security evaluation method. The method includes:

A security coprocessor of an electronic device determines a target security evaluation result based on first security information in a case that a security evaluation request sent by an application server is received, where the first security information includes security status information of a rich execution environment REE of the electronic device or a security evaluation result of the REE.

The security coprocessor of the electronic device decrypts a first ciphertext by using a root key of the electronic device, to obtain a private key of the electronic device, where the first ciphertext is a ciphertext obtained by the security coprocessor by encrypting the private key of the electronic device by using the root key of the electronic device.

The security coprocessor of the electronic device signs the target security evaluation result by using the private key of the electronic device, to obtain a signature of the target security evaluation result.

The electronic device sends second security information to the application server, where the second security information includes the target security evaluation result and the signature of the target security evaluation result.

According to a second aspect, an embodiment of this application provides a security evaluation apparatus, used in an electronic device, and the apparatus includes:
a first determining module, configured to determine a target security evaluation result based on first security information in a case that a security evaluation request sent by an application server is received, where the first security information includes security status information of a rich execution environment REE of the electronic device or a security evaluation result of the REE;
a decryption module, configured to decrypt a first ciphertext by using a root key of the electronic device, to obtain a private key of the electronic device, where the first ciphertext is a ciphertext obtained by a security coprocessor by encrypting the private key of the electronic device by using the root key of the electronic device;
a signing module, configured to sign the target security evaluation result by using the private key of the electronic device, to obtain a signature of the target security evaluation result; and
a first sending module, configured to send second security information to the application server, where the second security information includes the target security evaluation result and the signature of the target security evaluation result.

According to a third aspect, an embodiment of this application provides a service processing method. The method includes:

An application server sends a security evaluation request to an electronic device, where the security evaluation request is used to request to evaluate security of the electronic device.

The application server receives second security information from the electronic device, where the second security information includes a target security evaluation result, a signature of the target security evaluation result, and first digital certificate information, the target security evaluation result is used to indicate security of a rich execution environment REE of the electronic device, the first digital certificate information includes a digital certificate of the electronic device or an identifier of the digital certificate of the electronic device, and the digital certificate of the electronic device is obtained by signing a public key of the electronic device by using a private key of a management server.

The application server determines, based on the second security information, that the electronic device is allowed to access a target service or that the electronic device is not allowed to access the target service, where the target service is a service provided by the application server for the electronic device.

According to a fourth aspect, an embodiment of this application provides a service processing apparatus, used in an application server, and the apparatus includes:
a third sending module, configured to send a security evaluation request to an electronic device, where the security evaluation request is used to request to evaluate security of the electronic device;
a first receiving module, configured to receive second security information from the electronic device, where the second security information includes a target security evaluation result, a signature of the target security evaluation result, and first digital certificate information, the target security evaluation result is used to indicate security of a rich execution environment REE of the electronic device, the first digital certificate information includes a digital certificate of the electronic device or an identifier of the digital certificate of the electronic device, and the digital certificate of the electronic device is obtained by signing a public key of the electronic device by using a private key of a management server; and
a third determining module, configured to determine, based on the second security information, that the electronic device is allowed to access a target service or that the electronic device is not allowed to access the target service, where the target service is a service provided by the application server for the electronic device.

According to a fifth aspect, an embodiment of this application provides a security information transmission method. The method includes:

A management server generates a digital certificate, where the digital certificate includes a digital certificate of an electronic device and a digital certificate of the management server, the digital certificate of the electronic device is obtained by signing a public key of the electronic device by using a private key of the management server, the digital certificate of the management server is obtained by signing a public key of the management server by using the private key of the management server, or is obtained by signing the public key of the management server by using a private key corresponding to a public key of a target digital certificate, and the target digital certificate is a digital certificate that is in a digital certificate chain to which the digital certificate of the management server belongs and that is at an upper layer of the digital certificate of the management server.

The management server sends second digital certificate information to the electronic device, where the second digital certificate information includes a digital certificate of the electronic device or an identifier of the digital certificate of the electronic device.

According to a sixth aspect, an embodiment of this application provides a security information transmission apparatus, used in a management server, and the apparatus includes:
a generation module, configured to generate a digital certificate, where the digital certificate includes a digital certificate of an electronic device and a digital certificate of the management server, the digital certificate of the electronic device is obtained by signing a public key of the electronic device by using a private key of the management server, the digital certificate of the management server is obtained by signing a public key of the management server by using the private key of the management server, or is obtained by signing the public key of the management server by using a private key corresponding to a public key of a target digital certificate, and the target digital certificate is a digital certificate that is in a digital certificate chain to which the digital certificate of the management server belongs and that is at an upper layer of the digital certificate of the management server; and
a fourth sending module, configured to send second digital certificate information to the electronic device, where the second digital certificate information includes a digital certificate of the electronic device or an identifier of the digital certificate of the electronic device.

According to a seventh aspect, an embodiment of this application provides an electronic device. The electronic device includes a processor and a memory. The memory stores a program or an instruction that can be run on the processor; and when the program or the instruction is executed by the processor, the steps of the security evaluation method according to the first aspect are implemented.

According to an eighth aspect, an embodiment of this application provides an application server. The application server includes a processor and a memory. The memory stores a program or an instruction that can be run on the processor; and when the program or the instruction is executed by the processor, the steps of the service processing method according to the third aspect are implemented.

According to a ninth aspect, an embodiment of this application provides a management server. The management server includes a processor and a memory. The memory stores a program or an instruction that can be run on the processor; and when the program or the instruction is executed by the processor, the steps of the security information transmission method according to the fifth aspect are implemented.

According to a tenth aspect, an embodiment of this application provides a readable storage medium. The readable storage medium stores a program or an instruction; and when the program or instruction is executed by a processor, the steps of the security evaluation method according to the first aspect are implemented, or the steps of the service processing method according to the third aspect are implemented, or the steps of the security information transmission method according to the fifth aspect are implemented.

According to an eleventh aspect, an embodiment of this application provides a chip. The chip includes a processor and a communication interface, the communication interface is coupled to the processor, and the processor is configured to run a program or an instruction, to implement the method according to the first aspect, or implement the steps of the service processing method according to the third aspect, or implement the steps of the security information transmission method according to the fifth aspect.

According to a twelfth aspect, an embodiment of this application provides a computer program product. The program product is stored in a storage medium, and the program product is executed by at least one processor, to implement the method according to the first aspect, or implement the steps of the service processing method according to the third aspect, or implement the steps of the security information transmission method according to the fifth aspect.

In embodiments of this application, the security coprocessor of the electronic device determines the target security evaluation result based on the first security information in a case that the security evaluation request sent by the application server is received, where the first security information includes security status information of the REE of the electronic device or the security evaluation result of the REE. The security coprocessor of the electronic device decrypts the first ciphertext by using the root key of the electronic device, to obtain the private key of the electronic device, where the first ciphertext is the ciphertext obtained by the security coprocessor of the electronic device by encrypting the private key of the electronic device by using the root key of the electronic device. The security coprocessor of the electronic device signs the target security evaluation result by using the private key of the electronic device, to obtain the signature of the target security evaluation result. The electronic device sends the second security information to the application server, where the second security information includes the target security evaluation result and the signature of the target security evaluation result. That is, in the embodiments of this application, the security coprocessor of the electronic device determines the target security evaluation result, signs the target security evaluation result by using the private key of the electronic device, and encrypts the private key of the electronic device by using the root key of the electronic device. In this way, binding of the security evaluation result to the electronic device can be implemented, a case in which the security evaluation result is tampered with can be reduced, and reliability of the security evaluation result of the electronic device can be improved. In addition, because the security coprocessor has a capability of resisting attacks such as a hardware side channel and fault injection, security of the foregoing security evaluation process can be ensured.

### BRIEF DESCRIPTION OF DRAWINGS

FIG. 1 is a flowchart of a security evaluation method according to an embodiment of this application;
FIG. 2 is a schematic diagram of a security evaluation system according to an embodiment of this application;
FIG. 3 is a flowchart of another security evaluation method according to an embodiment of this application;
FIG. 4 is a flowchart of still another security evaluation method according to an embodiment of this application;
FIG. 5 is a flowchart of still another security evaluation method according to an embodiment of this application;
FIG. 6 is a flowchart of still another security evaluation method according to an embodiment of this application;
FIG. 7 is a diagram of a structure of a security evaluation apparatus according to an embodiment of this application;
FIG. 8 is a diagram of a structure of another security evaluation apparatus according to an embodiment of this application;
FIG. 9 is a diagram of a structure of still another security evaluation apparatus according to an embodiment of this application;
FIG. 10 is a diagram of a structure of still another security evaluation apparatus according to an embodiment of this application;
FIG. 11 is a schematic diagram of a structure of a service processing apparatus according to an embodiment of this application;
FIG. 12 is a schematic diagram of a structure of another service processing apparatus according to an embodiment of this application;
FIG. 13 is a schematic diagram of a structure of a security information transmission apparatus according to an embodiment of this application;
FIG. 14 is a schematic diagram of a structure of another security information transmission apparatus according to an embodiment of this application;
FIG. 15 is a schematic diagram 1 of a structure of an electronic device according to an embodiment of this application;
FIG. 16 is a schematic diagram 2 of a structure of an electronic device according to an embodiment of this application; and
FIG. 17 is a schematic diagram of a structure of a server according to an embodiment of this application.

### DESCRIPTION OF EMBODIMENTS

The following clearly describes technical solutions in embodiments of this application with reference to the accompanying drawings in the embodiments of this application. Apparently, the described embodiments are some but not all of the embodiments of this application. All other embodiments obtained by a person of ordinary skill based on the embodiments of this application shall fall within the protection scope of this application.

The terms "first", "second", and the like in this specification and claims of this application are used to distinguish between similar objects instead of describing a specific order or sequence. It should be understood that terms used in such a way are interchangeable in proper circumstances, so that the embodiments of this application can be implemented in an order other than the order illustrated or described herein. Objects classified by "first", "second", and the like are usually of a same type, and a quantity of objects is not limited. For example, there may be one or more first objects. In addition, in this specification and the claims, "and/or" indicates at least one of connected objects, and the character "/" usually indicates an "or" relationship between associated objects.

With reference to the accompanying drawings, the following describes in detail a security evaluation method, an apparatus, an electronic device, a management server, and an application server provided in the embodiments of this application by using specific embodiments and application scenarios.

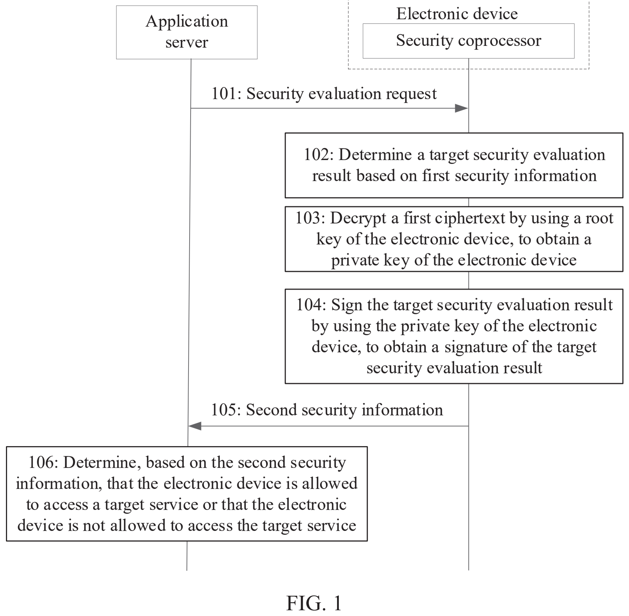

FIG. 1 is a flowchart of a security evaluation method according to an embodiment of this application. As shown in FIG. 1, the method includes the following steps.

Step 101: An application server sends a security evaluation request to an electronic device, where the security evaluation request is used to request to evaluate security of the electronic device.

In this embodiment, the application server may provide a server of any application service (for example, mobile payment, mobile banking, and financial services). The electronic device may be a terminal. The terminal may be a terminal-side device, for example, a mobile phone, a tablet personal computer, a laptop computer, a notebook computer, a personal digital assistant (PDA), a palmtop computer, a netbook, an ultra-mobile personal computer (UMPC), an augmented reality (AR) device, a virtual reality (VR) device, a robot, a wearable device, vehicle user equipment (VUE), maritime user equipment, pedestrian user equipment (PUE), a game console, and a personal computer (PC).

The security evaluation request may include an authorization token. For example, the authorization token may be an authorization token issued by a management server of the electronic device.

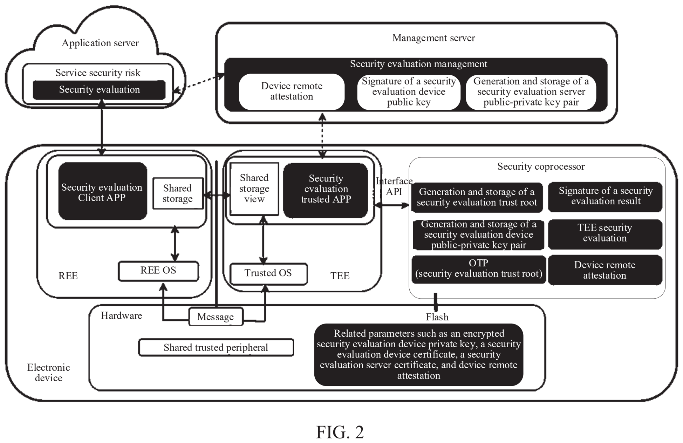

For example, the application server may send the security evaluation request to an REE side of the electronic device. For example, as shown in FIG. 2, the application server may send the security evaluation request to a security evaluation client application (namely, the Client App) of the REE side of the electronic device through a security evaluation module of the application server.

In some optional embodiments, the application server may transmit the security evaluation request to the electronic device based on a transmission security mechanism. For example, the application server may transmit the security evaluation request to the electronic device by using a transport layer security (TLS) protocol, to improve transmission security.

Step 102: A security coprocessor of the electronic device determines a target security evaluation result based on first security information in a case that the electronic device receives the security evaluation request sent by the application server, where the first security information includes security status information of an REE of the electronic device or a security evaluation result of the REE.

The electronic device includes the security coprocessor, for example, a secure processing unit (SPU). In addition, the electronic device further includes the REE and a trusted execution environment (TEE). A rich execution environment operating system (OS) runs in the REE, and a trusted execution environment operating system runs in the TEE, as shown in FIG. 2. It should be noted that the foregoing security coprocessor has a capability of resisting attacks such as a hardware side channel and fault injection, and security of the security coprocessor is high. However, the TEE has security risks such as a software-side channel attack and a reverse engineering attack on an application of the TEE. Compared with that of the security coprocessor, security of the TEE is low.

Specifically, in a case that the electronic device receives the security evaluation request sent by the application server, the security coprocessor of the electronic device may obtain the first security information, and determine the target security evaluation result based on the first security information. For example, the security coprocessor of the electronic device may receive the first security information from a TEE side of the electronic device, and the TEE side of the electronic device may receive the security status information of the REE from the REE side of the electronic device.

For example, the REE side of the electronic device receives the security evaluation request sent by the application server, collects security status information of the REE, and may send an authorization token, the security status information of the REE, and the like to the TEE side of the electronic device, so that the TEE side can verify validity of the authorization token, to detect whether the application server has a permission to obtain a security status of the electronic device. For example, the TEE side determines that the application server has the permission to obtain the security status of the electronic device in a case that it is determined that the authorization token is valid. In this case, a subsequent security evaluation related operation may be continued. In a case that verification of the authorization token fails or it is determined that the authorization token is invalid, the security evaluation related operation may be ended, and prompt information is returned, to prompt the application server to reapply for the authorization token.

Further, the TEE side may send the security status information of the REE to the security coprocessor in a case that it is determined that the application server has the permission to obtain the security status of the electronic device. Alternatively, the TEE side may perform security evaluation based on the security status information of the REE to obtain the security evaluation result of the REE, and send the security status information of the TEE and the security evaluation result of the REE to the security coprocessor.

In some optional embodiments, the first security information may further include security status information of the TEE of the electronic device or a security evaluation result of the TEE.

Correspondingly, the TEE side may collect the security status information of the TEE, and send the security status information of the TEE and the security status information of the REE to the security coprocessor. Alternatively, the TEE side may perform security evaluation based on the security status information of the REE to obtain the security evaluation result of the REE, and send the security status information of the TEE and the security evaluation result of the REE to the security coprocessor. Alternatively, the TEE side may perform security evaluation based on the security status information of the REE to obtain the security evaluation result of the REE, perform security evaluation based on the security status information of the TEE to obtain the security evaluation result of the TEE, and send the security evaluation result of the TEE and the security evaluation result of the REE to the security coprocessor.

For example, in a case that the first security information includes the security status information of the REE, the security coprocessor may perform security evaluation based on the security status information of the REE to obtain the security evaluation result of the REE, and may use the security evaluation result of the REE as the target security evaluation result. In a case that the first security information includes the security evaluation result of the REE and the security status information of the TEE, the security coprocessor may perform security evaluation based on the security status information of the TEE to obtain the security evaluation result of the TEE, and may synthesize the security evaluation result of the REE and the security evaluation result of the TEE to obtain the target security evaluation result. In a case that the first security information includes the security evaluation result of the REE and the security evaluation result of the TEE, the security coprocessor may directly synthesize the security evaluation result of the REE and the security evaluation result of the TEE to obtain the target security evaluation result.

The security evaluation result of the REE and the security evaluation result of the TEE are synthesized to obtain the target security evaluation result. For example, weighted summation may be performed on the security evaluation result of the REE and the security evaluation result of the TEE or comprehensive scoring may be performed based on a preset model, to obtain the target security evaluation result.

The security status information of the REE may include but is not limited to indicator elements such as a malicious/deceptive/spoofing application, virus infection, application signature verification, verification startup, application layer data encryption, software-based memory vulnerability prevention, and application layer trustworthiness, and status information of each indicator element. For example, for an indicator element that is a malicious/deceptive/spoofing application, corresponding status information may be one of non-existent, unknown, and existing. For another example, for an indicator element that is virus infection, corresponding status information may be one of non-existent, unknown, and existing. For still another example, for an indicator element that is verification startup, corresponding status information may be either supported or not supported.

For example, for performing security evaluation based on the security status information of the REE, a score corresponding to each indicator element may be determined based on status information of each indicator element in the security status information of the REE, and then the security evaluation result of the REE may be obtained through calculation based on a score and a weight corresponding to each indicator element. Alternatively, the security status information of the REE may be input into a pre-constructed security status evaluation model, to obtain the security evaluation result of the REE.

The security status information of the TEE may include but is not limited to indicator elements such as a malicious/deceptive/spoofing application, virus infection, trusted verification startup, trusted user interaction, biometric features recognition, sensitive information storage, kernel real-time security protection, system integrity measurement, and kernel control flow integrity measurement, and status information of each indicator element. For example, for an indicator element that is a malicious/deceptive/spoofing application, corresponding status information may be one of non-existent, unknown, and existing. For another example, for an indicator element that is virus infection, corresponding status information may be one of non-existent, unknown, and existing. For still another example, for an indicator element that is trusted verification startup, corresponding status information may be either supported or not supported.

For example, for performing security evaluation based on the security status information of the TEE, a score corresponding to each indicator element may be determined based on status information of each indicator element in the security status information of the TEE, and then the security evaluation result of the TEE may be obtained through calculation based on a score and a weight corresponding to each indicator element. Alternatively, the security status information of the TEE may be input into a pre-constructed security status evaluation model, to obtain the security evaluation result of the TEE.

Step 103: The security coprocessor decrypts a first ciphertext by using a root key of the electronic device, to obtain a private key of the electronic device, where the first ciphertext is a ciphertext obtained by the security coprocessor by encrypting the private key of the electronic device by using the root key of the electronic device.

The root key may be a random number generated by the electronic device. For example, the root key may be a random number generated by a hardware security module (HSM), the security coprocessor, or the like of the electronic device. The root key may be stored in a secure storage area, for example, a one-time programmable (OTP) memory. The OTP memory may be located in the security coprocessor, or may be located at a location of the electronic device other than the security coprocessor.

It should be noted that the root key may be a root key newly generated for security evaluation of the electronic device, that is, the root key may be a root key dedicated to security evaluation of the electronic device. Alternatively, the root key may reuse an existing root key. In this case, in addition to security evaluation of the electronic device, the root key is further used for another service or function, for example, a screen lock function of the electronic device. In some optional embodiments, an existing root key in the OTP memory of the electronic device may be reused to perform security evaluation of the electronic device.

The private key of the electronic device and a public key of the electronic device form a public-private key pair. The public-private key pair of the electronic device may be generated by a hardware security module, a security coprocessor, or the like of the electronic device. In addition, the private key of the electronic device may be encrypted by the security coprocessor by using the root key of the electronic device, and then stored in a storage area of the electronic device, for example, stored in a flash (Flash), an OTP memory, or the like of the electronic device. This may reduce a risk of leaking the private key of the electronic device.

For example, the security coprocessor may read the root key of the electronic device from the OTP memory of the security coprocessor, obtain the first ciphertext from the flash of the electronic device, and further may decrypt the first ciphertext based on the root key of the electronic device, to obtain the private key of the electronic device.

In some optional embodiments, the public-private key pair of the electronic device is generated by the security coprocessor. In this way, security of the public-private key pair of the electronic device can be improved.

In some optional embodiments, the public-private key pair of the electronic device is generated by the security coprocessor; and the public-private key pair of the electronic device includes the private key of the electronic device and the public key corresponding to the private key of the electronic device, so that security of the public-private key pair of the electronic device can be improved.

It should be noted that the root key may also be referred to as a security evaluation trust root, the private key of the electronic device may also be referred to as a device private key, and the public key of the electronic device may also be referred to as a device public key.

Step 104: The security coprocessor signs the target security evaluation result by using the private key of the electronic device, to obtain a signature of the target security evaluation result.

In some optional embodiments, the security coprocessor may perform hash calculation on the target security evaluation result, to obtain a hash value of the target security evaluation result, and sign the hash value of the target security evaluation result by using the private key of the electronic device, to obtain the signature of the target security evaluation result. In this way, compared with directly signing the target security evaluation result by using the private key of the electronic device, this may improve efficiency of signing the target security evaluation result.

Step 105: The electronic device sends second security information to the application server, where the second security information includes the target security evaluation result and the signature of the target security evaluation result.

For example, the security coprocessor may send the second security information to the TEE side, the TEE side may send the second security information to the REE side, and further, the REE side may send the second security information to the application server. For example, the security coprocessor may send the second security information to a security evaluation trusted application (Trusted App) of the TEE side, the security evaluation trusted application of the TEE side may send the second security information to the security evaluation client application of the REE side, and further, the security evaluation client application of the REE side sends the second security information to the security evaluation module of the application server.

In some optional embodiments, the REE side of the electronic device may send the second security information to the application server by using a transmission security mechanism. For example, the REE side of the electronic device may transmit the second security information to the application server based on a TLS protocol, to improve transmission security.

Step 106: The application server determines, based on the second security information, that the electronic device is allowed to access a target service or that the electronic device is not allowed to access the target service in a case that the second security information is received, where the target service is a service provided by the application server for the electronic device.

For example, the signature of the target security evaluation result may be verified based on the public key of the electronic device. In a case that the verification succeeds, it may be determined, based on the target security evaluation result, that the electronic device is allowed to access the target service or that the electronic device is not allowed to access the target service. For example, in a case that the target security evaluation result indicates that the electronic device is a secure device, the electronic device is allowed to access the target service; or in a case that the target security evaluation result indicates that the electronic device is an insecure device, the electronic device is not allowed to access the target service. It may be understood that, in a case that verification of the signature of the target security evaluation result fails, the electronic device is not allowed to access the target service.

In this embodiment of this application, the security coprocessor determines the target security evaluation result, signs the target security evaluation result by using the private key of the electronic device, and encrypts the private key of the electronic device by using the root key of the electronic device. In this way, binding of the security evaluation result to the electronic device can be implemented, a case in which the security evaluation result is tampered with can be reduced, and reliability of the security evaluation result of the electronic device can be improved. In addition, because the security coprocessor has a capability of resisting attacks such as a hardware side channel and fault injection, security of the foregoing security evaluation process can be ensured.

In some optional embodiments, the second security information further includes first digital certificate information, and the first digital certificate information includes a digital certificate of the electronic device or an identifier of the digital certificate of the electronic device; and
the digital certificate of the electronic device is obtained by signing the public key of the electronic device by using a private key of a management server.

In this embodiment, the management server may be configured to manage the electronic device. The private key of the management server and a public key of the management server form a public-private key pair of the management server. For example, the public-private key pair of the management server may be generated by a key management service (KMS), a hardware security module, or the like of the management server, and stored in the hardware security module of the management server. It should be noted that the private key of the management server may also be referred to as a server private key, and the public key of the management server may also be referred to as a server public key.

In some optional embodiments, the first digital certificate information further includes a digital certificate of the management server or an identifier of the digital certificate of the management server; and
the digital certificate of the management server is obtained by signing a public key of the management server by using the private key of the management server, or is obtained by signing the public key of the management server by using a private key corresponding to a public key of a target digital certificate, and the target digital certificate is a digital certificate that is in a digital certificate chain to which the digital certificate of the management server belongs and that is at an upper layer of the digital certificate of the management server.

Correspondingly, before step 105, to be specific, before the electronic device sends the second security information to the application server, the method may further include:

The management server generates a digital certificate, where the digital certificate includes a digital certificate of an electronic device and a digital certificate of the management server, the digital certificate of the electronic device is obtained by signing a public key of the electronic device by using a private key of the management server, the digital certificate of the management server is obtained by signing a public key of the management server by using the private key of the management server, or is obtained by signing the public key of the management server by using a private key corresponding to a public key of a target digital certificate, and the target digital certificate is a digital certificate that is in a digital certificate chain to which the digital certificate of the management server belongs and that is at an upper layer of the digital certificate of the management server.

The management server sends second digital certificate information to the electronic device, where the second digital certificate information includes a digital certificate of the electronic device or an identifier of the digital certificate of the electronic device.

The electronic device stores the second digital certificate information in a case that the second digital certificate information is received from the management server.

Specifically, the management server may sign the public key of the electronic device based on the private key of the management server to obtain the digital certificate of the electronic device, may sign the public key of the management server based on the private key of the management server or the private key corresponding to the public key of the target digital certificate to obtain the digital certificate of the management server, and may send the digital certificate of the electronic device and the digital certificate of the management server to the electronic device, so that the electronic device can store the digital certificate of the electronic device and the digital certificate of the management server in a flash of the electronic device.

In some optional embodiments, before the management server generates the digital certificate, the management server may receive a digital certificate generation request from the electronic device, and then the management server may generate the digital certificate based on the digital certificate generation request. Optionally, the digital certificate generation request may include the public key of the electronic device.

In some optional embodiments, the second digital certificate information further includes the digital certificate of the management server or an identifier of the digital certificate of the management server.

Correspondingly, step 106, to be specific, that the application server determines, based on the second security information, that the electronic device is allowed to access a target service or that the electronic device is not allowed to access the target service may include:

The application server verifies the digital certificate of the management server based on the public key in the digital certificate of the management server or the target digital certificate.

The application server verifies the digital certificate of the electronic device based on the digital certificate of the management server in a case that the digital certificate of the management server succeeds in verification.

The application server verifies the signature of the target security evaluation result based on the digital certificate of the electronic device in a case that the digital certificate of the electronic device succeeds in verification.

The application server determines, based on the target security evaluation result, that the electronic device is allowed to access the target service or that the electronic device is not allowed to access the target service in a case that the signature of the target security evaluation result succeeds in verification.

It may be understood that, the application server verifies the digital certificate of the management server based on the public key in the digital certificate of the management server in a case that the digital certificate of the management server is obtained by signing the public key of the management server by using the private key of the management server. The application server verifies the digital certificate of the management server based on the target digital certificate in a case that the digital certificate of the management server is obtained by signing the public key of the management server by using the private key corresponding to the public key of the target digital certificate.

The application server determines, based on the target security evaluation result, that the electronic device is allowed to access the target service or that the electronic device is not allowed to access the target service. For example, the application server allows the electronic device to access the target service in a case that it is determined, based on the target security evaluation result, that the electronic device is a secure device; or the application server does not allow the electronic device to access the target service in a case that it is determined, based on the target security evaluation result, that the electronic device is an insecure device.

In some optional embodiments, the application server does not allow the electronic device to access the target service in a case that any one of the following is met:
verification of the digital certificate of the management server does not succeed or fails;
verification of the digital certificate of the electronic device does not succeed or fails; and
verification of the signature of the target security evaluation result does not succeed or fails.

In this embodiment of this application, signature verification is performed on a digital certificate chain (for example, the digital certificate of the management server, the digital certificate of the electronic device, and the signature of the target security evaluation result) based on the target digital certificate or the digital certificate of the management server, and it is determined, based on the target security evaluation result only in a case that verification of the foregoing digital certificates succeeds, that the electronic device is allowed to access the target service or that the electronic device is not allowed to access the target service. In this way, a case that the target security evaluation result is tampered with by an attacker can be further reduced, and reliability of security evaluation can be further ensured.

In some optional implementations, in a case that the second digital certificate information further includes the digital certificate of the management server, the application server may directly verify the digital certificate of the management server based on the public key in the digital certificate of the management server or the target digital certificate. In a case that the second digital certificate information further includes the identifier of the digital certificate of the management server, the application server may obtain the digital certificate of the management server from the management server based on the identifier of the digital certificate of the management server, and further, may verify the digital certificate of the management server based on the public key in the digital certificate of the management server or the target digital certificate.

In some optional implementations, in a case that the second digital certificate information does not include the digital certificate of the management server or the identifier of the digital certificate of the management server, the application server may determine the identifier of the digital certificate of the management server based on the digital certificate of the electronic device, obtain the digital certificate of the management server based on the identifier of the digital certificate of the management server, and further, may verify the digital certificate of the management server based on the public key in the digital certificate of the management server or the target digital certificate.

In some optional embodiments, before step 102, to be specific, before that the security coprocessor determines the target security evaluation result based on the first security information, the method further includes:

The security coprocessor obtains a target verification result of the electronic device, where the target verification result is a verification result obtained by the management server by verifying security of the electronic device.

Correspondingly, step 102, to be specific, that the security coprocessor determines the target security evaluation result based on the first security information includes:

The security coprocessor determines the target security evaluation result based on the first security information in a case that the target verification result indicates that the electronic device is a secure device.

For example, the security coprocessor may send a verification request to the management server each time security evaluation needs to be performed, and receive a verification result from the management server, to ensure that the electronic device itself is a secure device each time security evaluation is performed. Alternatively, the security coprocessor may periodically send a verification request to the management server, receive a verification result from the management server, and store the verification result. In each period, security of the electronic device itself may be determined based on the verification result. In this way, while ensuring that the electronic device itself is a secure device, overheads are reduced.

Correspondingly, after the security coprocessor obtains the target verification result, if the target verification result indicates that the electronic device is a secure device, the security coprocessor may determine the target security evaluation result based on the first security information. If the target verification result indicates that the electronic device is an insecure device, the security coprocessor may end the procedure, that is, stop a security evaluation related operation, and prompt the application server that the security evaluation fails or the electronic device is an insecure device.

In this embodiment of this application, the management server verifies security of the electronic device itself. In this way, it may be ensured that the security coprocessor determines the target security evaluation result based on the first security information in a case that the electronic device itself is a secure device, so that reliability of security evaluation of the electronic device can be further improved.

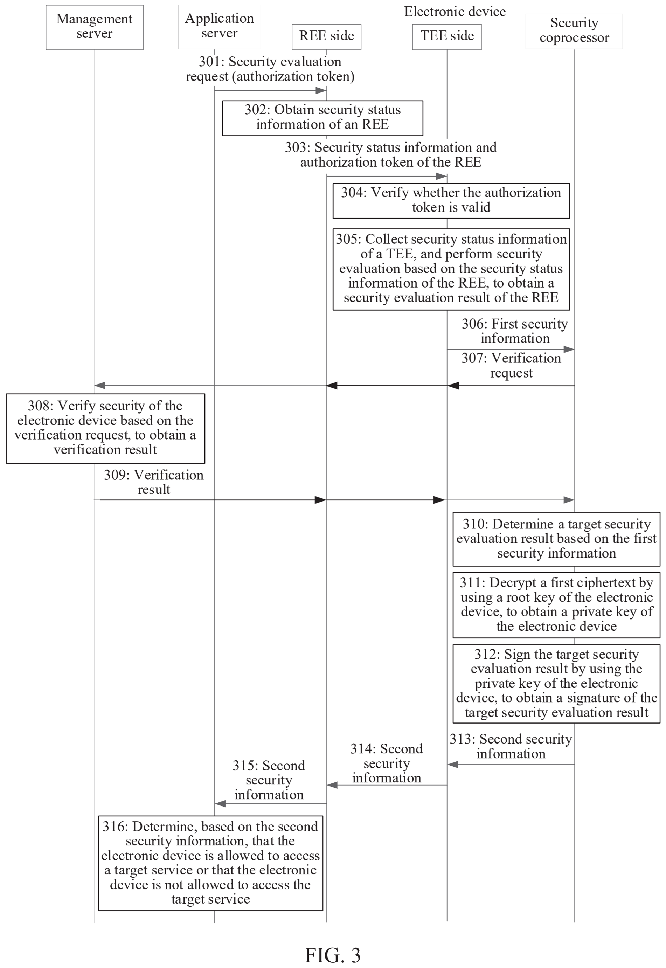

FIG. 3 is a flowchart of a security evaluation method according to an embodiment of this application. As shown in FIG. 3, the method includes the following steps.

Step 301: An application server sends a security evaluation request to an REE side of an electronic device, where the security evaluation request is used to request to evaluate security of the electronic device, and the security evaluation request includes an authorization token.

Step 302: The REE side of the electronic device obtains security status information of an REE in a case that the REE side of the electronic device receives the security evaluation request sent by the application server.

Step 303: The REE side of the electronic device sends the authorization token and the security status information of the REE to a TEE side of the electronic device.

Step 304: The TEE side of the electronic device verifies whether the authorization token is valid in a case that the authorization token and the security status information of the REE are received.

The TEE side determines that the application server has a permission to obtain a security status of the electronic device in a case that it us determined that the authorization token is valid. In this case, step 305 is performed; otherwise, a security evaluation related operation may be ended, and prompt information is returned, to prompt the application server to reapply for the authorization token.

Step 305: The TEE side of the electronic device collects security status information of a TEE, and
performs security evaluation on the security status information of the REE, to obtain a security evaluation result of the REE.

Step 306: The TEE side of the electronic device sends first security information to a security coprocessor of the electronic device, where the first security information includes the security status information of the TEE and the security evaluation result of the REE.

It should be noted that, for step 301 to step 306 above, refer to related descriptions in the foregoing embodiment. Details are not described herein.

Step 307: The security coprocessor sends a verification request to a management server through the TEE and the REE of the electronic device in a case that the first security information is received, where the verification request is used to request to verify security of the electronic device, and the verification request includes a security verification related parameter of the electronic device.

In some optional embodiments, the security coprocessor queries whether a verification result of the electronic device in a validity period exists in the electronic device in a case that the first security information is received. In a case that the verification result of the electronic device in the validity period exists in the electronic device, the security coprocessor determines the verification result of the electronic device in the validity period as the target verification result. In a case that the verification result of the electronic device in the validity period does not exist in the electronic device, the security coprocessor sends the verification request to the management server through the TEE and the REE of the electronic device, so that efficiency of security verification on the electronic device can be improved, and resource overheads can be reduced.

It should be noted that in this embodiment, each time after receiving the verification result from the management server through the TEE and the REE of the electronic device, the security coprocessor may store the verification result, and set a corresponding validity period. In the validity period, whether the electronic device itself is a secure device may be determined based on the verification result. The validity period may be properly set based on an actual requirement.

Optionally, the security verification related parameter of the electronic device includes at least one of the following: a device fingerprint, a hardware configuration parameter, a firmware configuration parameter, a firmware version, a system configuration parameter, and a system version.

For example, the device fingerprint may be information that can uniquely identify the electronic device, for example,
a unique serial number of the device and a device identifier.

Step 308: The management server verifies security of the electronic device based on the security verification related parameter of the electronic device, to obtain a verification result in a case that the verification request is received, where the verification result is used to indicate that the electronic device is a secure device or an insecure device.

For example, the management server may verify security of the electronic device based on whether the system version of the electronic device is a latest version, whether the firmware version is a latest version, whether the system is rooted, whether the hardware configuration is tampered with, whether the firmware configuration is tampered with, and the like to obtain the verification result. Security verification performed by the management server on the electronic device may also be referred to as device remote attestation, and the verification result may also be referred to as a device remote attestation result.

In some optional embodiments, after that the management server verifies security of the electronic device based on the security verification related parameter of the electronic device, to obtain a verification result, the method further includes:

The management server sends the verification result to the application server.

In this embodiment, the management server may further send the verification result to the application server, and the application server may determine, based on the verification result, that the electronic device itself is a secure device or an insecure device, and further may determine whether to allow the electronic device to access a target service.

For example, the application server may determine, based on a target security evaluation result, whether to allow the electronic device to access the target service in a case that the verification result indicates that the electronic device is a secure device. The application server may not allow the electronic device to access the target service in a case that the verification result indicates that the electronic device is an insecure device.

In some optional embodiments, the management server sends the verification result to the application server in a case that the verification result indicates that the electronic device is an insecure device. Correspondingly, the application server does not allow the electronic device to access the target service in a case that the verification result is received.

Step 309: The management server sends the verification result to the electronic device.

Step 310: The security coprocessor determines the target security evaluation result based on the first security information if the verification result indicates that the electronic device is a secure device in a case that the verification result sent by the management server is received through the TEE and the REE of the electronic device.

Optionally, if the verification result indicates that the electronic device is an insecure device, the electronic device sends first indication information to the application server, where the first indication information is used to indicate that the electronic device is an insecure device or security evaluation on the electronic device fails.

Step 311: The security coprocessor of the electronic device decrypts a first ciphertext by using a root key of the electronic device, to obtain a private key of the electronic device, where the first ciphertext is a ciphertext obtained by the security coprocessor by encrypting the private key of the electronic device by using the root key of the electronic device.

Step 312: The security coprocessor of the electronic device signs the target security evaluation result by using the private key of the electronic device, to obtain a signature of the target security evaluation result.

Step 313: The security coprocessor of the electronic device sends second security information to the TEE side, where the second security information includes the target security evaluation result, the signature of the target security evaluation result, and first digital certificate information, the first digital certificate information includes a digital certificate of the electronic device or an identifier of the digital certificate of the electronic device, and the digital certificate of the electronic device is obtained by signing a public key of the electronic device by using a private key of the management server.

In some optional embodiments, the first digital certificate information further includes a digital certificate of the management server or an identifier of the digital certificate of the management server.

Step 314: The TEE side sends the second security information to the REE side.

Step 315: The REE side sends the second security information to the application server.

Step 316: The application server determines, based on the second security information, that the electronic device is allowed to access a target service or that the electronic device is not allowed to access the target service in a case that the second security information is received, where the target service is a service provided by the application server for the electronic device.

It should be noted that, for step 311 to step 316 above, refer to related descriptions in the foregoing embodiment. Details are not described herein.

In this embodiment of this application, the security coprocessor of the electronic device determines the target security evaluation result, signs the target security evaluation result by using the private key of the electronic device, and encrypts the private key of the electronic device by using the root key of the electronic device. In this way, binding of the security evaluation result to the electronic device can be implemented, a case in which the security evaluation result is tampered with can be reduced, and reliability of the security evaluation result of the electronic device can be improved. In addition, the management server verifies security of the electronic device itself. In this way, it may be ensured that the security coprocessor determines the target security evaluation result based on the first security information in a case that the electronic device itself is a secure device, so that reliability of security evaluation of the electronic device can be further improved.

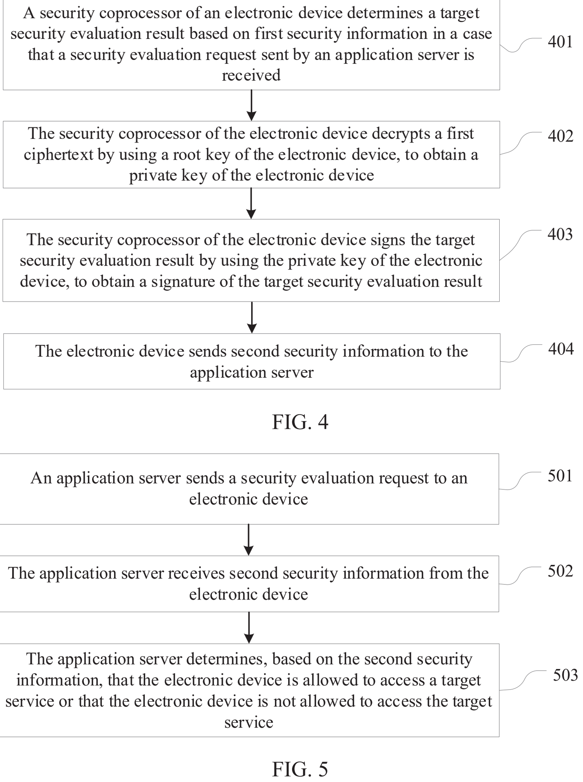

FIG. 4 is a flowchart of a security evaluation method according to an embodiment of this application. As shown in FIG. 4, the method includes the following steps.

Step 401: A security coprocessor of an electronic device determines a target security evaluation result based on first security information in a case that a security evaluation request sent by an application server is received, where the first security information includes security status information of a rich execution environment REE of the electronic device or a security evaluation result of the REE.

Specifically, in a case that the electronic device receives the security evaluation request sent by the application server, the security coprocessor of the electronic device may obtain the first security information, and determine the target security evaluation result based on the first security information. For example, the security coprocessor of the electronic device may receive the first security information from a TEE side of the electronic device, and the TEE side of the electronic device may receive the security status information of the REE from the REE side of the electronic device.

Step 402: The security coprocessor of the electronic device decrypts a first ciphertext by using a root key of the electronic device, to obtain a private key of the electronic device, where the first ciphertext is a ciphertext obtained by the security coprocessor by encrypting the private key of the electronic device by using the root key of the electronic device.

Step 403: The security coprocessor of the electronic device signs the target security evaluation result by using the private key of the electronic device, to obtain a signature of the target security evaluation result.

Step 404: The electronic device sends second security information to the application server, where the second security information includes the target security evaluation result and the signature of the target security evaluation result.

Optionally, the root key is stored in an OTP memory of the electronic device.

In this embodiment, the root key is stored in the OTP memory, so that the root key can be prevented from being tampered with.

It should be noted that the OTP memory may be located in the security coprocessor, or may be located at a location different from the security coprocessor in the electronic device.

Optionally, the root key of the electronic device is generated by the security coprocessor.

In this embodiment, the security coprocessor generates the root key of the electronic device. Because the security coprocessor has a capability of resisting attacks such as a hardware side channel and fault injection, security of the root key of the electronic device is improved.

Optionally, a public-private key pair of the electronic device is generated by the security coprocessor; and
the public-private key pair of the electronic device includes the private key of the electronic device and a public key corresponding to the private key of the electronic device.

In this embodiment, the security coprocessor generates the public-private key pair of the electronic device. Because the security coprocessor has a capability of resisting attacks such as a hardware side channel and fault injection, security of the public-private key pair of the electronic device is improved.

In some optional embodiments, the root key of the electronic device is generated by the security coprocessor, and the root key is stored in the OTP memory of the security coprocessor. In this way, the root key of the electronic device can be accessed only by the security coprocessor, and is not exposed to any software.

In some optional embodiments, the root key of the electronic device is different from another device identifier of the electronic device, that is, the another device identifier of the electronic device is not reused as the root key. In this way, it can be prevented that different services can be associated by using a same device identifier, and security risks such as device tracking and information leakage can be reduced.

Optionally, the second security information further includes first digital certificate information, and the first digital certificate information includes a digital certificate of the electronic device or an identifier of the digital certificate of the electronic device; and
the digital certificate of the electronic device is obtained by signing the public key of the electronic device by using a private key of a management server.

Optionally, the first digital certificate information further includes a digital certificate of the management server or an identifier of the digital certificate of the management server; and
the digital certificate of the management server is obtained by signing a public key of the management server by using the private key of the management server, or is obtained by signing the public key of the management server by using a private key corresponding to a public key of a target digital certificate, and the target digital certificate is a digital certificate that is in a digital certificate chain to which the digital certificate of the management server belongs and that is at an upper layer of the digital certificate of the management server.

Optionally, before that a security coprocessor of an electronic device determines a target security evaluation result based on first security information, the method further includes:

The electronic device obtains a target verification result of the electronic device, where the target verification result is a verification result obtained by the management server by verifying security of the electronic device.

That a security coprocessor of an electronic device determines a target security evaluation result based on first security information includes:

The security coprocessor of the electronic device determines the target security evaluation result based on the first security information in a case that the target verification result indicates that the electronic device is a secure device.

Optionally, the method further includes:
The electronic device sends first indication information to the application server in a case that the target verification result indicates that the electronic device is an insecure device, where the first indication information is used to indicate that the electronic device is an insecure device or security evaluation on the electronic device fails.

Optionally, that the electronic device obtains a target verification result of the electronic device includes:

The electronic device sends a verification request to the management server, where the verification request is used to request to verify security of the electronic device, and the verification request includes a security verification related parameter of the electronic device.

The electronic device receives a verification result sent by the management server, where the target verification result is the verification result sent by the management server.

Optionally, before that the electronic device sends a verification request to the management server, the method further includes:

The electronic device queries whether a verification result of the electronic device in a validity period exists in the electronic device.

The electronic device determines the verification result of the electronic device in the validity period as the target verification result in a case that the verification result of the electronic device in the validity period exists in the electronic device.

That the electronic device sends a verification request to the management server includes:

The electronic device sends the verification request to the management server in a case that the verification result of the electronic device in the validity period does not exist in the electronic device.

Optionally, the security verification related parameter of the electronic device includes at least one of the following: a device fingerprint, a hardware configuration parameter, a firmware configuration parameter, a firmware version, a system configuration parameter, and a system version.

Optionally, the first security information further includes security status information of a trusted execution environment TEE of the electronic device or a security evaluation result of the TEE.

Optionally, the first security information includes the security evaluation result of the REE and the security status information of the TEE; and
that a security coprocessor of an electronic device determines a target security evaluation result based on first security information includes:
the security coprocessor of the electronic device performs security evaluation on the TEE based on the security status information of the TEE, to obtain a security evaluation result of the TEE; and
the security coprocessor of the electronic device determines a target security evaluation result based on the security evaluation result of the TEE and the security evaluation result of the REE.

In this embodiment, the security evaluation performed on the TEE by the security coprocessor may improve reliability of the security evaluation result of the TEE compared with security evaluation performed on the TEE by the TEE itself.

Optionally, the security evaluation result of the REE is a security evaluation result obtained by performing security evaluation by the TEE based on the security status information of the REE.

In this embodiment, the security evaluation result of the REE is obtained by performing security evaluation by the TEE based on the security status information of the REE. Compared with obtaining the security evaluation result of the REE by performing security evaluation by the REE based on the security status information of the REE, reliability of the security evaluation result of the REE can be improved.

It should be noted that for an implementation of this implementation, refer to related descriptions of the embodiments shown in FIG. 1 and FIG. 3. Details are not described herein.

FIG. 5 is a flowchart of a service processing method according to an embodiment of this application. As shown in FIG. 5, the method includes the following steps.

Step 501: An application server sends a security evaluation request to an electronic device, where the security evaluation request is used to request to evaluate security of the electronic device.

Step 502: The application server receives second security information from the electronic device, where the second security information includes a target security evaluation result, a signature of the target security evaluation result, and first digital certificate information, the target security evaluation result is used to indicate security of a rich execution environment REE of the electronic device, the first digital certificate information includes a digital certificate of the electronic device or an identifier of the digital certificate of the electronic device, and the digital certificate of the electronic device is obtained by signing a public key of the electronic device by using a private key of a management server.

Step 503: The application server determines, based on the second security information, that the electronic device is allowed to access a target service or that the electronic device is not allowed to access the target service, where the target service is a service provided by the application server for the electronic device.

Optionally, that the application server determines, based on the second security information, that the electronic device is allowed to access a target service or that the electronic device is not allowed to access the target service includes:

The application server verifies a digital certificate of the management server based on a public key in the digital certificate of the management server or a target digital certificate, where the digital certificate of the management server is obtained by signing the public key of the management server by using the private key of the management server, or is obtained by signing the public key of the management server by using a private key corresponding to a public key of the target digital certificate, and the target digital certificate is a digital certificate that is in a digital certificate chain to which the digital certificate of the management server belongs and that is at an upper layer of the digital certificate of the management server.

The application server verifies the digital certificate of the electronic device based on the digital certificate of the management server in a case that the digital certificate of the management server succeeds in verification.

The application server verifies the signature of the target security evaluation result based on the digital certificate of the electronic device in a case that the digital certificate of the electronic device succeeds in verification.

The application server determines, based on the target security evaluation result, that the electronic device is allowed to access the target service or that the electronic device is not allowed to access the target service in a case that the signature of the target security evaluation result succeeds in verification.

Optionally, the first digital certificate information further includes a digital certificate of the management server or an identifier of the digital certificate of the management server.

Optionally, before that the application server verifies the digital certificate of the management server based on a first digital certificate, the method further includes:

The application server determines an identifier of the digital certificate of the management server based on the digital certificate of the electronic device.

The application server obtains the digital certificate of the management server based on the identifier of the digital certificate of the management server.

It should be noted that for an implementation of this implementation, refer to related descriptions of the embodiments shown in FIG. 1 and FIG. 3. Details are not described herein.

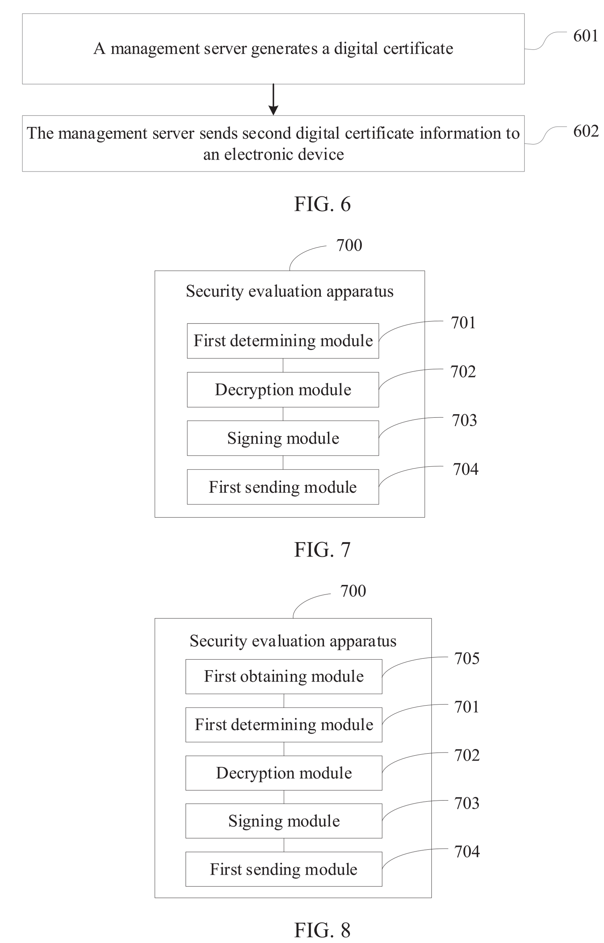

FIG. 6 is a flowchart of a security information transmission method according to an embodiment of this application. As shown in FIG. 6, the method includes the following steps.

Step 601: A management server generates a digital certificate, where the digital certificate includes a digital certificate of an electronic device and a digital certificate of the management server, the digital certificate of the electronic device is obtained by signing a public key of the electronic device by using a private key of the management server, the digital certificate of the management server is obtained by signing a public key of the management server by using the private key of the management server, or is obtained by signing the public key of the management server by using a private key corresponding to a public key of a target digital certificate, and the target digital certificate is a digital certificate that is in a digital certificate chain to which the digital certificate of the management server belongs and that is at an upper layer of the digital certificate of the management server.

Step 602: The management server sends second digital certificate information to the electronic device, where the second digital certificate information includes a digital certificate of the electronic device or an identifier of the digital certificate of the electronic device.

In some optional embodiments, the management server may receive a digital certificate generation request sent by the electronic device, and generate the digital certificate in response to the digital certificate generation request.

Optionally, the private key of the management server is stored in a hardware security module HSM of the management server.

Optionally, the method further includes:
The management server receives a verification request sent by the electronic device, where the verification request is used to request to verify security of the electronic device, and the verification request includes a security verification related parameter of the electronic device.

The management server verifies security of the electronic device based on the security verification related parameter of the electronic device, to obtain a verification result, where the verification result is used to indicate that the electronic device is a secure device or an insecure device.

The management server sends the verification result to the electronic device.

Optionally, the security verification related parameter of the electronic device includes at least one of the following: a device fingerprint, a hardware configuration parameter, a firmware configuration parameter, a firmware version, a system configuration parameter, and a system version.

It should be noted that for an implementation of this implementation, refer to related descriptions of the embodiments shown in FIG. 1 and FIG. 3. Details are not described herein.

The security information transmission method provided in the embodiments of this application may be performed by a security information transmission apparatus. The security information transmission apparatus provided in the embodiments of this application is described by using an example in which the security information transmission apparatus performs the security information transmission method in the embodiments of this application.

FIG. 7 is a schematic diagram of a structure of a security evaluation apparatus according to an embodiment of this application. The security evaluation apparatus is used in an electronic device. As shown in FIG. 7, the security evaluation apparatus 700 includes:
a first determining module 701, configured to determine a target security evaluation result based on first security information in a case that a security evaluation request sent by an application server is received, where the first security information includes security status information of a rich execution environment REE of the electronic device or a security evaluation result of the REE;
a decryption module 702, configured to decrypt a first ciphertext by using a root key of the electronic device, to obtain a private key of the electronic device, where the first ciphertext is a ciphertext obtained by a security coprocessor by encrypting the private key of the electronic device by using the root key of the electronic device;
a signing module 703, configured to sign the target security evaluation result by using the private key of the electronic device, to obtain a signature of the target security evaluation result; and
a first sending module 704, configured to send second security information to the application server, where the second security information includes the target security evaluation result and the signature of the target security evaluation result.

Optionally, the root key is stored in a one-time programmable OTP memory of the electronic device.

Optionally, the root key of the electronic device is generated by the security coprocessor.

Optionally, a public-private key pair of the electronic device is generated by the security coprocessor; and
the public-private key pair of the electronic device includes the private key of the electronic device and a public key corresponding to the private key of the electronic device.

Optionally, the second security information further includes first digital certificate information, and the first digital certificate information includes a digital certificate of the electronic device or an identifier of the digital certificate of the electronic device; and
the digital certificate of the electronic device is obtained by signing the public key of the electronic device by using a private key of a management server.

Optionally, the first digital certificate information further includes a digital certificate of the management server or an identifier of the digital certificate of the management server; and
the digital certificate of the management server is obtained by signing a public key of the management server by using the private key of the management server, or is obtained by signing the public key of the management server by using a private key corresponding to a public key of a target digital certificate, and the target digital certificate is a digital certificate that is in a digital certificate chain to which the digital certificate of the management server belongs and that is at an upper layer of the digital certificate of the management server.

Optionally, as shown in FIG. 8, the apparatus further includes:
a first obtaining module 705, configured to: before the target security evaluation result is determined based on the first security information, obtain a target verification result of the electronic device, where the target verification result is a verification result obtained by the management server by verifying security of the electronic device; where
the first determining module 701 is specifically configured to:
   determine the target security evaluation result based on the first security information in a case that the target verification result indicates that the electronic device is a secure device.

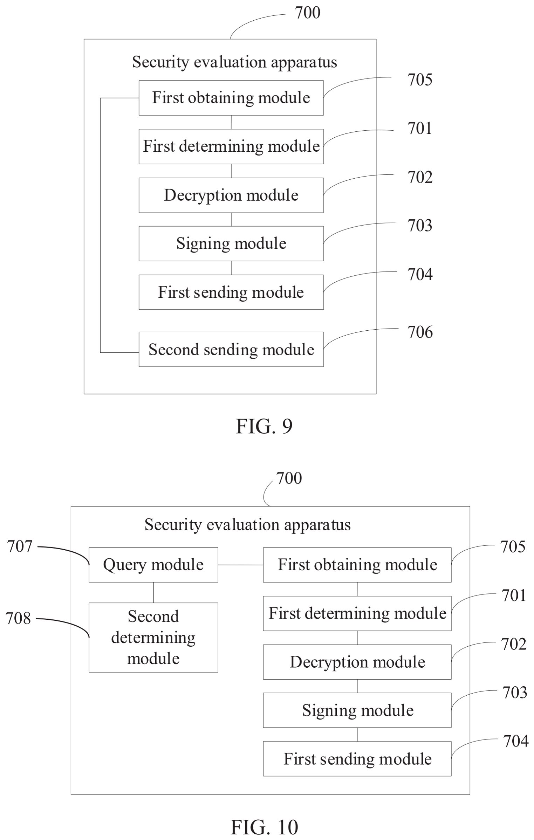

Optionally, as shown in FIG. 9, the apparatus further includes:
a second sending module 706, configured to send first indication information to the application server in a case that the target verification result indicates that the electronic device is an insecure device, where the first indication information is used to indicate that the electronic device is an insecure device or security evaluation on the electronic device fails.

Optionally, the first obtaining module 705 is specifically configured to:
send a verification request to the management server, where the verification request is used to request to verify security of the electronic device, and the verification request includes a security verification related parameter of the electronic device; and
receive a verification result sent by the management server, where the target verification result is the verification result sent by the management server.

Optionally, as shown in FIG. 10, the apparatus further includes:
a query module 707, configured to: before the verification request is sent to the management server, query whether a verification result of the electronic device in a validity period exists in the electronic device; and
a second determining module 708, configured to determine the verification result of the electronic device in the validity period as the target verification result in a case that the verification result of the electronic device in the validity period exists in the electronic device; where
the first obtaining module 705 is specifically configured to:
   send the verification request to the management server in a case that the verification result of the electronic device in the validity period does not exist in the electronic device.

Optionally, the security verification related parameter of the electronic device includes at least one of the following: a device fingerprint, a hardware configuration parameter, a firmware configuration parameter, a firmware version, a system configuration parameter, and a system version.

Optionally, the first security information further includes security status information of a trusted execution environment TEE of the electronic device or a security evaluation result of the TEE.

Optionally, the first security information includes the security evaluation result of the REE and the security status information of the TEE; and
the first determining module 701 is specifically configured to:
perform security evaluation on the TEE based on the security status information of the TEE, to obtain a security evaluation result of the TEE; and
determine the target security evaluation result based on the security evaluation result of the TEE and the security evaluation result of the REE.

Optionally, the security evaluation result of the REE is a security evaluation result obtained by performing security evaluation by the TEE based on the security status information of the REE.

The security evaluation apparatus in this embodiment of this application may be an electronic device, or may be a component such as a circuit or a chip in the electronic device. The electronic device may be a terminal, or may be a device other than the terminal. For example, the electronic device may be a mobile phone, a tablet computer, a notebook computer, a palmtop computer, a vehicle-mounted electronic device, a mobile internet device (MID), an augmented reality (AR)/virtual reality (VR) device, a robot, a wearable device, an ultra-mobile personal computer (UMPC), a netbook, a personal digital assistant (PDA), or the like. The electronic device may be alternatively a server, a network attached storage (NAS), a personal computer (PC), a television (TV), a teller machine, a self-service machine, or the like. This is not specifically limited in this embodiment of this application.

The security evaluation apparatus in this embodiment of this application may be an apparatus with an operating system. The operating system may be an Android operating system, may be an iOS operating system, or may be another possible operating system. This is not specifically limited in this embodiment of this application.

The security evaluation apparatus provided in this embodiment of this application can implement processes implemented in the foregoing method embodiments. To avoid repetition, details are not described herein again.

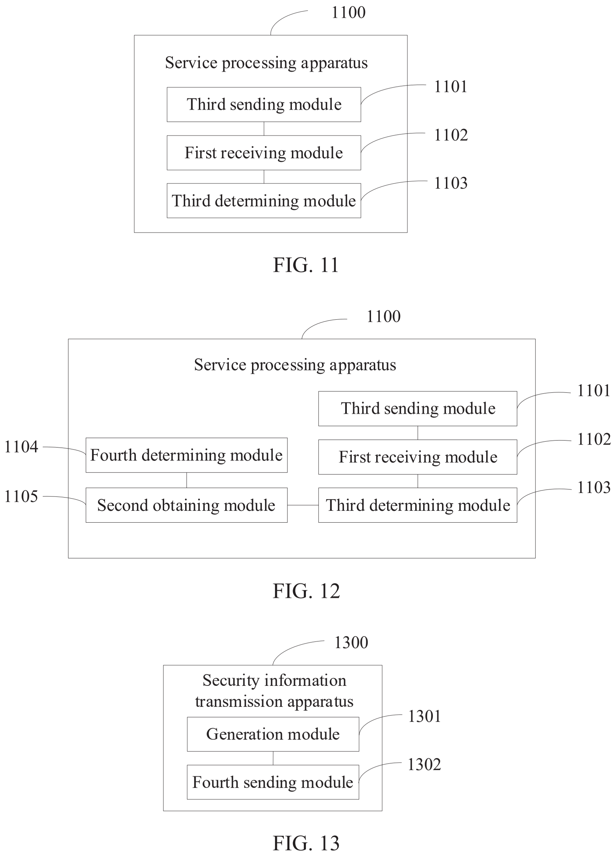

FIG. 11 is a schematic diagram of a structure of a service processing apparatus according to an embodiment of this application. The service processing apparatus is used in an application server. As shown in FIG. 11, the service processing apparatus 1100 includes:
a third sending module 1101, configured to send a security evaluation request to an electronic device, where the security evaluation request is used to request to evaluate security of the electronic device;
a first receiving module 1102, configured to receive second security information from the electronic device, where the second security information includes a target security evaluation result, a signature of the target security evaluation result, and first digital certificate information, the target security evaluation result is used to indicate security of a rich execution environment REE of the electronic device, the first digital certificate information includes a digital certificate of the electronic device or an identifier of the digital certificate of the electronic device, and the digital certificate of the electronic device is obtained by signing a public key of the electronic device by using a private key of a management server; and
a third determining module 1103, configured to determine, based on the second security information, that the electronic device is allowed to access a target service or that the electronic device is not allowed to access the target service, where the target service is a service provided by the application server for the electronic device.

Optionally, the third determining module is specifically configured to:
verify a digital certificate of the management server based on a public key in the digital certificate of the management server or a target digital certificate, where the digital certificate of the management server is obtained by signing the public key of the management server by using the private key of the management server, or is obtained by signing the public key of the management server by using a private key corresponding to a public key of the target digital certificate, and the target digital certificate is a digital certificate that is in a digital certificate chain to which the digital certificate of the management server belongs and that is at an upper layer of the digital certificate of the management server;
verify the digital certificate of the electronic device based on the digital certificate of the management server in a case that the digital certificate of the management server succeeds in verification;
verify the signature of the target security evaluation result based on the digital certificate of the electronic device in a case that the digital certificate of the electronic device succeeds in verification; and
determine, based on the target security evaluation result, that the electronic device is allowed to access the target service or that the electronic device is not allowed to access the target service in a case that the signature of the target security evaluation result succeeds in verification.

Optionally, the first digital certificate information further includes a digital certificate of the management server or an identifier of the digital certificate of the management server.

Optionally, as shown in FIG. 12, the apparatus further includes:
a fourth determining module 1104, configured to: before the digital certificate of the management server is verified based on a first digital certificate, determine an identifier of the digital certificate of the management server based on the digital certificate of the electronic device; and
a second obtaining module 1105, configured to obtain the digital certificate of the management server based on the identifier of the digital certificate of the management server.

The service processing apparatus in this embodiment of this application may be a server, or may be a component in the server, for example, an integrated circuit or a chip.

The service processing apparatus provided in this embodiment of this application can implement processes implemented in the foregoing method embodiments. To avoid repetition, details are not described herein again.

FIG. 13 is a schematic diagram of a structure of a security information transmission apparatus according to an embodiment of this application. The security information transmission apparatus is used in a management server. As shown in FIG. 13, the security information transmission apparatus 1300 includes:
a generation module 1301, configured to generate a digital certificate, where the digital certificate includes a digital certificate of an electronic device and a digital certificate of the management server, the digital certificate of the electronic device is obtained by signing a public key of the electronic device by using a private key of the management server, the digital certificate of the management server is obtained by signing a public key of the management server by using the private key of the management server, or is obtained by signing the public key of the management server by using a private key corresponding to a public key of a target digital certificate, and the target digital certificate is a digital certificate that is in a digital certificate chain to which the digital certificate of the management server belongs and that is at an upper layer of the digital certificate of the management server; and
a fourth sending module 1302, configured to send second digital certificate information to the electronic device, where the second digital certificate information includes a digital certificate of the electronic device or an identifier of the digital certificate of the electronic device.

Optionally, the second digital certificate information further includes the digital certificate of the management server or an identifier of the digital certificate of the management server.

Optionally, the private key of the management server is stored in a hardware security module HSM of the management server.

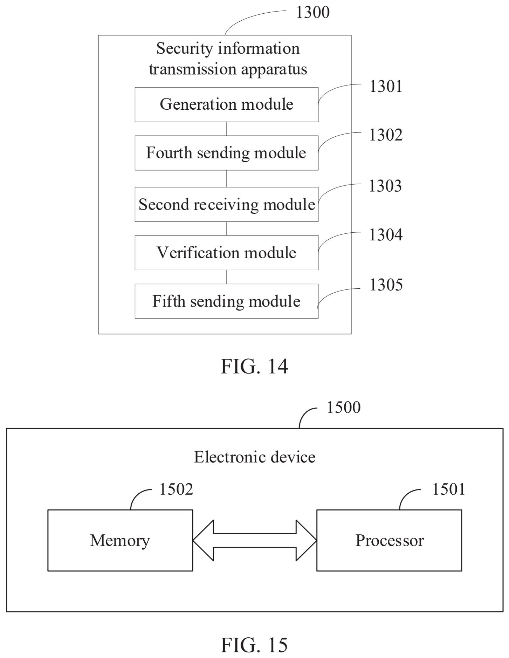

Optionally, as shown in FIG. 14, the apparatus further includes:
a second receiving module 1303, configured to receive a verification request sent by the electronic device, where the verification request is used to request to verify security of the electronic device, and the verification request includes a security verification related parameter of the electronic device;
a verification module 1304, configured to verify security of the electronic device based on the security verification related parameter of the electronic device, to obtain a verification result, where the verification result is used to indicate that the electronic device is a secure device or an insecure device; and
a fifth sending module 1305, configured to send the verification result to the electronic device.

Optionally, the security verification related parameter of the electronic device includes at least one of the following: a device fingerprint, a hardware configuration parameter, a firmware configuration parameter, a firmware version, a system configuration parameter, and a system version.

The security information transmission apparatus in this embodiment of this application may be a server, or may be a component in the server, for example, an integrated circuit or a chip.

The security information transmission apparatus provided in this embodiment of this application can implement processes implemented in the foregoing method embodiments. To avoid repetition, details are not described herein again.

Optionally, as shown in FIG. 15, an embodiment of this application further provides an electronic device 1500, including a processor 1501 and a memory 1502. The memory 1502 stores a program or an instruction that can be run on the processor 1501. The program or the instruction is executed by the processor 1501 to implement the steps of the foregoing security evaluation method embodiments, and same technical effect can be achieved. To avoid repetition, details are not described herein again.

It should be noted that the electronic device in this embodiment of this application includes a mobile electronic device and a non-mobile electronic device.

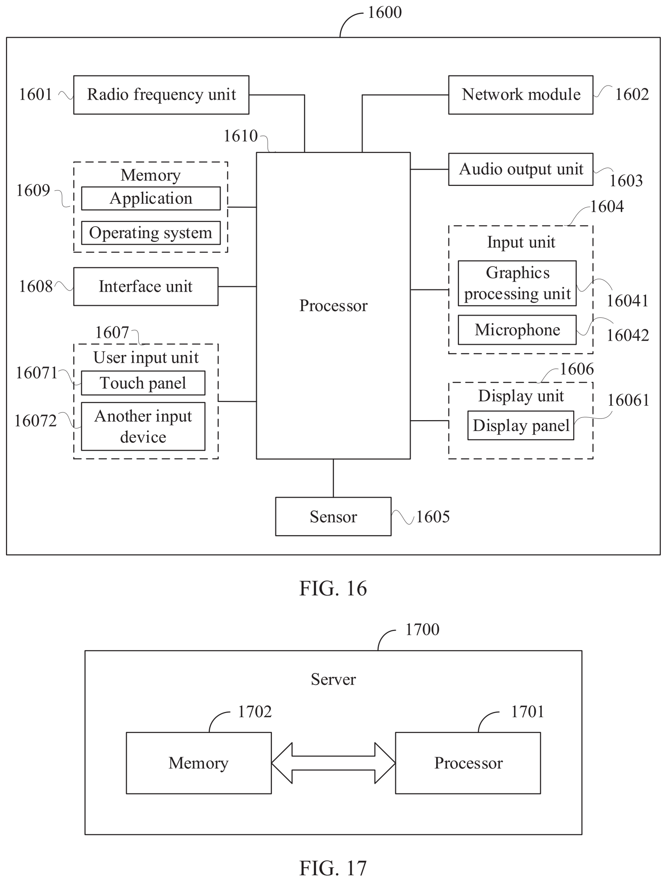

FIG. 16 is a schematic diagram of a hardware structure of an electronic device according to an embodiment of this application.

The electronic device 1600 includes but is not limited to components such as a radio frequency unit 1601, a network module 1602, an audio output unit 1603, an input unit 1604, a sensor 1605, a display unit 1606, a user input unit 1607, an interface unit 1608, a memory 1609, and a processor 1610. The processor 1610 may be a security coprocessor.

A person skilled in the art can understand that the electronic device 1600 may further include a power supply (for example, a battery) that supplies power to each component. The power supply may be logically connected to the processor 1610 by using a power supply management system, to manage functions such as charging, discharging, and power consumption by using the power supply management system. The structure of the electronic device shown in FIG. 16 does not constitute a limitation on the electronic device, and the electronic device may include more or fewer components than those shown in the figure, or combine some components, or have different component arrangements. Details are not described herein again.

The processor 1610 is configured to determine a target security evaluation result based on first security information in a case that a security evaluation request sent by an application server is received, where the first security information includes security status information of a rich execution environment REE of the electronic device or a security evaluation result of the REE; decrypt a first ciphertext by using a root key of the electronic device, to obtain a private key of the electronic device, where the first ciphertext is a ciphertext obtained by a security coprocessor by encrypting the private key of the electronic device by using the root key of the electronic device; and sign the target security evaluation result by using the private key of the electronic device, to obtain a signature of the target security evaluation result.

The radio frequency unit 1601 is configured to send second security information to the application server, where the second security information includes the target security evaluation result and the signature of the target security evaluation result.

Optionally, the root key is stored in a one-time programmable OTP memory of the electronic device.

Optionally, the root key of the electronic device is generated by the security coprocessor.

Optionally, a public-private key pair of the electronic device is generated by the security coprocessor; and
the public-private key pair of the electronic device includes the private key of the electronic device and a public key corresponding to the private key of the electronic device.

Optionally, the second security information further includes first digital certificate information, and the first digital certificate information includes a digital certificate of the electronic device or an identifier of the digital certificate of the electronic device; and
the digital certificate of the electronic device is obtained by signing the public key of the electronic device by using a private key of a management server.

Optionally, the first digital certificate information further includes a digital certificate of the management server or an identifier of the digital certificate of the management server; and
the digital certificate of the management server is obtained by signing a public key of the management server by using the private key of the management server, or is obtained by signing the public key of the management server by using a private key corresponding to a public key of a target digital certificate, and the target digital certificate is a digital certificate that is in a digital certificate chain to which the digital certificate of the management server belongs and that is at an upper layer of the digital certificate of the management server.

Optionally, the processor 1610 is further configured to: before the target security evaluation result is determined based on the first security information, obtain a target verification result of the electronic device, where the target verification result is a verification result obtained by the management server by verifying security of the electronic device; where
the processor 1610 is specifically configured to:
determine, by the security coprocessor, the target security evaluation result based on the first security information in a case that the target verification result indicates that the electronic device is a secure device.

Optionally, the radio frequency unit 1601 is further configured to send first indication information to the application server in a case that the target verification result indicates that the electronic device is an insecure device, where the first indication information is used to indicate that the electronic device is an insecure device or security evaluation on the electronic device fails.

Optionally, the processor 1610 is specifically configured to:
send a verification request to the management server, where the verification request is used to request to verify security of the electronic device, and the verification request includes a security verification related parameter of the electronic device; and
receive a verification result sent by the management server, where the target verification result is the verification result sent by the management server.

Optionally, the processor 1610 is further configured to:
before the verification request is sent to the management server, query whether a verification result of the electronic device in a validity period exists in the electronic device;
determine the verification result of the electronic device in the validity period as the target verification result in a case that the verification result of the electronic device in the validity period exists in the electronic device; and
send the verification request to the management server in a case that the verification result of the electronic device in the validity period does not exist in the electronic device.

Optionally, the security verification related parameter of the electronic device includes at least one of the following: a device fingerprint, a hardware configuration parameter, a firmware configuration parameter, a firmware version, a system configuration parameter, and a system version.

Optionally, the first security information further includes security status information of a trusted execution environment TEE of the electronic device or a security evaluation result of the TEE.

Optionally, the first security information includes the security evaluation result of the REE and the security status information of the TEE; and
the processor 1610 is specifically configured to:
perform security evaluation on the TEE based on the security status information of the TEE, to obtain a security evaluation result of the TEE; and
determine the target security evaluation result based on the security evaluation result of the TEE and the security evaluation result of the REE.

Optionally, the security evaluation result of the REE is a security evaluation result obtained by performing security evaluation by the TEE based on the security status information of the REE.

It should be understood that in this embodiment of this application, the input unit 1604 may include a graphics processing unit (GPU) 16041 and a microphone 16042. The graphics processing unit 16041 processes image data of a static picture or a video obtained by an image capture apparatus (for example, a camera) in a video capture mode or an image capture mode. The display unit 1606 may include a display panel 16061, and the display panel 16061 may be configured in a form of a liquid crystal display, an organic light-emitting diode, or the like. The user input unit 1607 includes at least one of a touch panel 16071 and another input device 16072. The touch panel 16071 is also referred to as a touchscreen. The touch panel 16071 may include two parts: a touch detection apparatus and a touch controller. The another input device 16072 may include but is not limited to a physical keyboard, a functional button (such as a volume control button or a power on/off button), a trackball, a mouse, and a joystick. Details are not described herein.

The memory 1609 may be configured to store a software program and various data. The memory 1609 may mainly include a first storage area for storing a program or an instruction and a second storage area for storing data. The first storage area may store an operating system, and an application or an instruction required by at least one function (for example, a sound playing function or an image playing function). In addition, the memory 1609 may be a volatile memory or a non-volatile memory, or the memory 1609 may include a volatile memory and a non-volatile memory. The non-volatile memory may be a read-only memory (ROM), a programmable read-only memory (PROM), an erasable programmable read-only memory (EPROM), an electrically erasable programmable read-only memory (EEPROM), or a flash memory. The volatile memory may be a random access memory (RAM), a static random access memory (SRAM), a dynamic random access memory (DRAM), a synchronous dynamic random access memory (SDRAM), a double data rate synchronous dynamic random access memory (DDRSDRAM), an enhanced synchronous dynamic random access memory (ESDRAM), a synch link dynamic random access memory (SLDRAM), and a direct rambus random access memory (DRRAM). The memory 1609 in this embodiment of this application includes but is not limited to these memories and any memory of another proper type.

The processor 1610 may include one or more processing units. Optionally, an application processor and a modem processor are integrated into the processor 1610. The application processor mainly processes an operating system, a user interface, an application, or the like. The modem processor mainly processes a wireless communication signal, for example, a baseband processor. It may be understood that, alternatively, the modem processor may not be integrated into the processor 1610.

An embodiment of this application further provides a readable storage medium. The readable storage medium stores a program or an instruction; and when the program or the instruction is executed by a processor, the processes of the foregoing security evaluation method embodiments are implemented, and same technical effect can be achieved. To avoid repetition, details are not described herein again.

The processor is a processor in the electronic device in the foregoing embodiments. The readable storage medium includes a computer-readable storage medium, for example, a computer read-only memory ROM, a random access memory RAM, a magnetic disk, or an optical disc.

Optionally, as shown in FIG. 17, an embodiment of this application further provides a server 1700, including a processor 1701 and a memory 1702. The memory 1702 stores a program or an instruction that can be run on the processor 1701; and when the program or the instruction is executed by the processor 1701, the steps of the foregoing service processing method embodiment on a side of the application server or the steps of the foregoing security information transmission method embodiment on a side of the management server are implemented, and same technical effect can be achieved. To avoid repetition, details are not described herein again.

An embodiment of this application further provides a chip. The chip includes a processor and a communication interface, the communication interface is coupled to the processor, and the processor is configured to run a program or an instruction, to implement the processes of the foregoing security evaluation method embodiment, or implement the processes of the foregoing service processing method embodiment, or implementation the processes of the foregoing security information transmission method embodiment are implemented, and same technical effect can be achieved. To avoid repetition, details are not described herein again.

It should be understood that the chip mentioned in this embodiment of this application may also be referred to as a system-level chip, a system chip, a chip system, or an on-chip system chip.

An embodiment of this application provides a computer program product. The program product is stored in a storage medium, and the program product is executed by at least one processor, to implement the processes of the foregoing security evaluation method embodiment, or implement the processes of the foregoing service processing method embodiment, or implement the processes of the foregoing security information transmission method embodiment, and same technical effect can be achieved. To avoid repetition, details are not described herein again.

It should be noted that, in this specification, the term "include", "comprise", or any other variant thereof is intended to cover a non-exclusive inclusion, so that a process, a method, an article, or an apparatus that includes a list of elements not only includes those elements but also includes other elements which are not expressly listed, or further includes elements inherent to this process, method, article, or apparatus. In absence of more constraints, an element preceded by "includes a..." does not preclude the existence of other identical elements in the process, method, article, or apparatus that includes the element. In addition, it should be noted that the scope of the method and apparatus in the embodiments of this application is not limited to performing functions in the order shown or discussed, but may also include performing the functions in a basically simultaneous manner or in opposite order based on the functions involved. For example, the described method may be performed in a different order from the described order, and various steps may be added, omitted, or combined. In addition, features described with reference to some examples may be combined in other examples.

Based on the descriptions of the foregoing implementations, a person skilled in the art may clearly understand that the method in the foregoing embodiment may be implemented by software in addition to a necessary universal hardware platform or by hardware only. In most circumstances, the former is a preferred implementation. Based on such an understanding, the technical solutions of this application essentially or the part contributing to the prior art may be implemented in a form of a computer software product. The computer software product is stored in a storage medium (for example, a ROM/RAM, a floppy disk, or an optical disc), and includes several instructions for instructing a terminal (which may be a mobile phone, a computer, a server, a network device, or the like) to perform the methods described in the embodiments of this application.

The embodiments of this application are described above with reference to the accompanying drawings, but this application is not limited to the foregoing specific implementations, and the foregoing specific implementations are only illustrative and not restrictive. Under the enlightenment of this application, a person of ordinary skill in the art can make many forms without departing from the purpose of this application and the protection scope of the claims, all of which fall within the protection of this application.

## Claims

1. A security evaluation method, wherein the method comprises:
determining, by a security coprocessor of an electronic device, a target security evaluation result based on first security information in a case that a security evaluation request sent by an application server is received, wherein the first security information comprises security status information of a rich execution environment REE of the electronic device or a security evaluation result of the REE;
decrypting, by the security coprocessor of the electronic device, a first ciphertext by using a root key of the electronic device, to obtain a private key of the electronic device, wherein the first ciphertext is a ciphertext obtained by the security coprocessor by encrypting the private key of the electronic device by using the root key of the electronic device;
signing, by the security coprocessor of the electronic device, the target security evaluation result by using the private key of the electronic device, to obtain a signature of the target security evaluation result; and
sending, by the electronic device, second security information to the application server, wherein the second security information comprises the target security evaluation result and the signature of the target security evaluation result.

2. The method according to claim 1, wherein the root key is stored in a one-time programmable OTP memory of the electronic device.

3. The method according to claim 1, wherein the root key of the electronic device is generated by the security coprocessor.

4. The method according to claim 1, wherein a public-private key pair of the electronic device is generated by the security coprocessor; and
the public-private key pair of the electronic device comprises the private key of the electronic device and a public key corresponding to the private key of the electronic device.

5. The method according to claim 1, wherein the second security information further comprises first digital certificate information, and the first digital certificate information comprises a digital certificate of the electronic device or an identifier of the digital certificate of the electronic device; and
the digital certificate of the electronic device is obtained by signing the public key of the electronic device by using a private key of a management server.

6. The method according to claim 5, wherein the first digital certificate information further comprises a digital certificate of the management server or an identifier of the digital certificate of the management server; and
the digital certificate of the management server is obtained by signing a public key of the management server by using the private key of the management server, or is obtained by signing the public key of the management server by using a private key corresponding to a public key of a target digital certificate, and the target digital certificate is a digital certificate that is in a digital certificate chain to which the digital certificate of the management server belongs and that is at an upper layer of the digital certificate of the management server.

7. The method according to any one of claims 1 to 6, wherein before the determining, by a security coprocessor of an electronic device, a target security evaluation result based on first security information, the method further comprises:
obtaining, by the electronic device, a target verification result of the electronic device, wherein the target verification result is a verification result obtained by the management server by verifying security of the electronic device; and
the determining, by a security coprocessor of an electronic device, a target security evaluation result based on first security information comprises:
determining, by the security coprocessor of the electronic device, the target security evaluation result based on the first security information in a case that the target verification result indicates that the electronic device is a secure device.

8. The method according to claim 7, wherein the method further comprises:
sending, by the electronic device, first indication information to the application server in a case that the target verification result indicates that the electronic device is an insecure device, wherein the first indication information is used to indicate that the electronic device is an insecure device or security evaluation on the electronic device fails.

9. The method according to claim 7, wherein the obtaining, by the electronic device, a target verification result of the electronic device comprises:
sending, by the electronic device, a verification request to the management server, wherein the verification request is used to request to verify security of the electronic device, and the verification request comprises a security verification related parameter of the electronic device; and
receiving, by the electronic device, a verification result sent by the management server, wherein the target verification result is the verification result sent by the management server.

10. The method according to claim 9, wherein before the sending, by the electronic device, a verification request to the management server, the method further comprises:
querying, by the electronic device, whether a verification result of the electronic device in a validity period exists in the electronic device; and
determining, by the electronic device, the verification result of the electronic device in the validity period as the target verification result in a case that the verification result of the electronic device in the validity period exists in the electronic device; and
the sending a verification request to the management server comprises:
sending, by the electronic device, the verification request to the management server in a case that the verification result of the electronic device in the validity period does not exist in the electronic device.

11. The method according to claim 10, wherein the security verification related parameter of the electronic device comprises at least one of the following: a device fingerprint, a hardware configuration parameter, a firmware configuration parameter, a firmware version, a system configuration parameter, and a system version.

12. The method according to any one of claims 1 to 6, wherein the first security information further comprises security status information of a trusted execution environment TEE of the electronic device or a security evaluation result of the TEE.

13. The method according to claim 12, wherein the first security information comprises the security evaluation result of the REE and the security status information of the TEE; and
the determining, by a security coprocessor of an electronic device, a target security evaluation result based on first security information comprises:
performing, by the security coprocessor of the electronic device, security evaluation on the TEE based on the security status information of the TEE, to obtain a security evaluation result of the TEE; and
determining, by the security coprocessor of the electronic device, the target security evaluation result based on the security evaluation result of the TEE and the security evaluation result of the REE.

14. The method according to claim 13, wherein the security evaluation result of the REE is a security evaluation result obtained by performing security evaluation by the TEE based on the security status information of the REE.

15. A service processing method, wherein the method comprises:
sending, by an application server, a security evaluation request to an electronic device, wherein the security evaluation request is used to request to evaluate security of the electronic device;
receiving, by the application server, second security information from the electronic device, wherein the second security information comprises a target security evaluation result, a signature of the target security evaluation result, and first digital certificate information, the target security evaluation result is used to indicate security of a rich execution environment REE of the electronic device, the first digital certificate information comprises a digital certificate of the electronic device or an identifier of the digital certificate of the electronic device, and the digital certificate of the electronic device is obtained by signing a public key of the electronic device by using a private key of a management server; and
determining, by the application server based on the second security information, that the electronic device is allowed to access a target service or that the electronic device is not allowed to access the target service, wherein the target service is a service provided by the application server for the electronic device.

16. The method according to claim 15, wherein the determining, by the application server based on the second security information, that the electronic device is allowed to access a target service or that the electronic device is not allowed to access the target service comprises:
verifying, by the application server, a digital certificate of the management server based on a public key in the digital certificate of the management server or a target digital certificate, wherein the digital certificate of the management server is obtained by signing the public key of the management server by using the private key of the management server, or is obtained by signing the public key of the management server by using a private key corresponding to a public key of the target digital certificate, and the target digital certificate is a digital certificate that is in a digital certificate chain to which the digital certificate of the management server belongs and that is at an upper layer of the digital certificate of the management server;
verifying, by the application server, the digital certificate of the electronic device based on the digital certificate of the management server in a case that the digital certificate of the management server succeeds in verification;
verifying, by the application server, the signature of the target security evaluation result based on the digital certificate of the electronic device in a case that the digital certificate of the electronic device succeeds in verification; and
determining, by the application server based on the target security evaluation result, that the electronic device is allowed to access the target service or that the electronic device is not allowed to access the target service in a case that the signature of the target security evaluation result succeeds in verification.

17. The method according to claim 16, wherein the first digital certificate information further comprises the digital certificate of the management server or an identifier of the digital certificate of the management server.

18. The method according to claim 16, wherein before the verifying, by the application server, a digital certificate of the management server based on a public key in the digital certificate of the management server or a target digital certificate, the method further comprises:
determining, by the application server, an identifier of the digital certificate of the management server based on the digital certificate of the electronic device; and
obtaining, by the application server, the digital certificate of the management server based on the identifier of the digital certificate of the management server.

19. A security information transmission method, wherein the method comprises:
generating, by a management server, a digital certificate, wherein the digital certificate comprises a digital certificate of an electronic device and a digital certificate of the management server, the digital certificate of the electronic device is obtained by signing a public key of the electronic device by using a private key of the management server, the digital certificate of the management server is obtained by signing a public key of the management server by using the private key of the management server, or is obtained by signing the public key of the management server by using a private key corresponding to a public key of a target digital certificate, and the target digital certificate is a digital certificate that is in a digital certificate chain to which the digital certificate of the management server belongs and that is at an upper layer of the digital certificate of the management server; and
sending, by the management server, second digital certificate information to the electronic device, wherein the second digital certificate information comprises a digital certificate of the electronic device or an identifier of the digital certificate of the electronic device.

20. The method according to claim 19, wherein the second digital certificate information further comprises the digital certificate of the management server or an identifier of the digital certificate of the management server.

21. The method according to claim 19 or 20, wherein the private key of the management server is stored in a hardware security module HSM of the management server.

22. The method according to claim 19 or 20, wherein the method further comprises:
receiving, by the management server, a verification request sent by the electronic device, wherein the verification request is used to request to verify security of the electronic device, and the verification request comprises a security verification related parameter of the electronic device;
verifying, by the management server, security of the electronic device based on the security verification related parameter of the electronic device, to obtain a verification result, wherein the verification result is used to indicate that the electronic device is a secure device or an insecure device; and
sending, by the management server, the verification result to the electronic device.

23. The method according to claim 22, wherein the security verification related parameter of the electronic device comprises at least one of the following: a device fingerprint, a hardware configuration parameter, a firmware configuration parameter, a firmware version, a system configuration parameter, and a system version.

24. A security evaluation apparatus, used in an electronic device, wherein the apparatus comprises:
a first determining module, configured to determine a target security evaluation result based on first security information in a case that a security evaluation request sent by an application server is received, wherein the first security information comprises security status information of a rich execution environment REE of the electronic device or a security evaluation result of the REE;
a decryption module, configured to decrypt a first ciphertext by using a root key of the electronic device, to obtain a private key of the electronic device, wherein the first ciphertext is a ciphertext obtained by a security coprocessor by encrypting the private key of the electronic device by using the root key of the electronic device;
a signing module, configured to sign the target security evaluation result by using the private key of the electronic device, to obtain a signature of the target security evaluation result; and
a first sending module, configured to send second security information to the application server, wherein the second security information comprises the target security evaluation result and the signature of the target security evaluation result.

25. The apparatus according to claim 24, wherein the root key is stored in a one-time programmable OTP memory of the electronic device.

26. The apparatus according to claim 24, wherein the root key of the electronic device is generated by the security coprocessor.

27. The apparatus according to claim 24, wherein a public-private key pair of the electronic device is generated by the security coprocessor; and
the public-private key pair of the electronic device comprises the private key of the electronic device and a public key corresponding to the private key of the electronic device.

28. The apparatus according to claim 24, wherein the second security information further comprises first digital certificate information, and the first digital certificate information comprises a digital certificate of the electronic device or an identifier of the digital certificate of the electronic device; and
the digital certificate of the electronic device is obtained by signing the public key of the electronic device by using a private key of a management server.

29. The apparatus according to claim 28, wherein the first digital certificate information further comprises a digital certificate of the management server or an identifier of the digital certificate of the management server; and
the digital certificate of the management server is obtained by signing a public key of the management server by using the private key of the management server, or is obtained by signing the public key of the management server by using a private key corresponding to a public key of a target digital certificate, and the target digital certificate is a digital certificate that is in a digital certificate chain to which the digital certificate of the management server belongs and that is at an upper layer of the digital certificate of the management server.

30. The apparatus according to any one of claims 24 to 29, wherein the apparatus further comprises:
a first obtaining module, configured to: before the target security evaluation result is determined based on the first security information, obtain a target verification result of the electronic device, wherein the target verification result is a verification result obtained by the management server by verifying security of the electronic device; wherein
the first determining module is specifically configured to:
determine the target security evaluation result based on the first security information in a case that the target verification result indicates that the electronic device is a secure device.

31. The apparatus according to claim 30, wherein the apparatus further comprises:
a second sending module, configured to send first indication information to the application server in a case that the target verification result indicates that the electronic device is an insecure device, wherein the first indication information is used to indicate that the electronic device is an insecure device or security evaluation on the electronic device fails.

32. The apparatus according to claim 30, wherein the first obtaining module is specifically configured to:
send a verification request to the management server, wherein the verification request is used to request to verify security of the electronic device, and the verification request comprises a security verification related parameter of the electronic device; and
receive a verification result sent by the management server, wherein the target verification result is the verification result sent by the management server.

33. The apparatus according to claim 32, wherein the apparatus further comprises:
a query module, configured to: before the verification request is sent to the management server, query whether a verification result of the electronic device in a validity period exists in the electronic device; and
a second determining module, configured to determine the verification result of the electronic device in the validity period as the target verification result in a case that the verification result of the electronic device in the validity period exists in the electronic device; wherein
the first obtaining module is specifically configured to:
send the verification request to the management server in a case that the verification result of the electronic device in the validity period does not exist in the electronic device.

34. The apparatus according to claim 33, wherein the security verification related parameter of the electronic device comprises at least one of the following: a device fingerprint, a hardware configuration parameter, a firmware configuration parameter, a firmware version, a system configuration parameter, and a system version.

35. The apparatus according to any one of claims 24 to 29, wherein the first security information further comprises security status information of a trusted execution environment TEE of the electronic device or a security evaluation result of the TEE.

36. The apparatus according to claim 35, wherein the first security information comprises the security evaluation result of the REE and the security status information of the TEE; and
the first determining module is specifically configured to:
perform security evaluation on the TEE based on the security status information of the TEE, to obtain a security evaluation result of the TEE; and
determine the target security evaluation result based on the security evaluation result of the TEE and the security evaluation result of the REE.

37. The apparatus according to claim 36, wherein the security evaluation result of the REE is a security evaluation result obtained by performing security evaluation by the TEE based on the security status information of the REE.

38. A service processing apparatus, used in an application server, wherein the apparatus comprises:
a third sending module, configured to send a security evaluation request to an electronic device, wherein the security evaluation request is used to request to evaluate security of the electronic device;
a first receiving module, configured to receive second security information from the electronic device, wherein the second security information comprises a target security evaluation result, a signature of the target security evaluation result, and first digital certificate information, the target security evaluation result is used to indicate security of a rich execution environment REE of the electronic device, the first digital certificate information comprises a digital certificate of the electronic device or an identifier of the digital certificate of the electronic device, and the digital certificate of the electronic device is obtained by signing a public key of the electronic device by using a private key of a management server; and
a third determining module, configured to determine, based on the second security information, that the electronic device is allowed to access a target service or that the electronic device is not allowed to access the target service, wherein the target service is a service provided by the application server for the electronic device.

39. The apparatus according to claim 38, wherein the third determining module is specifically configured to:
verify a digital certificate of the management server based on a public key in the digital certificate of the management server or a target digital certificate, wherein the digital certificate of the management server is obtained by signing the public key of the management server by using the private key of the management server, or is obtained by signing the public key of the management server by using a private key corresponding to a public key of the target digital certificate, and the target digital certificate is a digital certificate that is in a digital certificate chain to which the digital certificate of the management server belongs and that is at an upper layer of the digital certificate of the management server;
verify the digital certificate of the electronic device based on the digital certificate of the management server in a case that the digital certificate of the management server succeeds in verification;
verify the signature of the target security evaluation result based on the digital certificate of the electronic device in a case that the digital certificate of the electronic device succeeds in verification; and
determine, based on the target security evaluation result, that the electronic device is allowed to access the target service or that the electronic device is not allowed to access the target service in a case that the signature of the target security evaluation result succeeds in verification.

40. The apparatus according to claim 39, wherein the first digital certificate information further comprises a digital certificate of the management server or an identifier of the digital certificate of the management server.

41. The apparatus according to claim 39, wherein the apparatus further comprises:
a fourth determining module, configured to: before the digital certificate of the management server is verified based on a first digital certificate, determine an identifier of the digital certificate of the management server based on the digital certificate of the electronic device; and
a second obtaining module, configured to obtain the digital certificate of the management server based on the identifier of the digital certificate of the management server.

42. A security information transmission apparatus, used in a management server, wherein the apparatus comprises:
a generation module, configured to generate a digital certificate, wherein the digital certificate comprises a digital certificate of an electronic device and a digital certificate of the management server, the digital certificate of the electronic device is obtained by signing a public key of the electronic device by using a private key of the management server, the digital certificate of the management server is obtained by signing a public key of the management server by using the private key of the management server, or is obtained by signing the public key of the management server by using a private key corresponding to a public key of a target digital certificate, and the target digital certificate is a digital certificate that is in a digital certificate chain to which the digital certificate of the management server belongs and that is at an upper layer of the digital certificate of the management server; and
a fourth sending module, configured to send second digital certificate information to the electronic device, wherein the second digital certificate information comprises a digital certificate of the electronic device or an identifier of the digital certificate of the electronic device.

43. The apparatus according to claim 42, wherein the second digital certificate information further comprises the digital certificate of the management server or an identifier of the digital certificate of the management server.

44. The apparatus according to claim 42 or 43, wherein the private key of the management server is stored in a hardware security module HSM of the management server.

45. The apparatus according to claim 42 or 43, wherein the apparatus further comprises:
a second receiving module, configured to receive a verification request sent by the electronic device, wherein the verification request is used to request to verify security of the electronic device, and the verification request comprises a security verification related parameter of the electronic device;
a verification module, configured to verify security of the electronic device based on the security verification related parameter of the electronic device, to obtain a verification result, wherein the verification result is used to indicate that the electronic device is a secure device or an insecure device; and
a fifth sending module, configured to send the verification result to the electronic device.

46. The apparatus according to claim 45, wherein the security verification related parameter of the electronic device comprises at least one of the following: a device fingerprint, a hardware configuration parameter, a firmware configuration parameter, a firmware version, a system configuration parameter, and a system version.

47. An electronic device, comprising a processor and a memory, wherein the memory stores a program or an instruction that can be run on the processor; and when the program or the instruction is executed by the processor, the steps of the security evaluation method according to any one of claims 1 to 14 are implemented.

48. A management server, comprising a processor and a memory, wherein the memory stores a program or an instruction that can be run on the processor; and when the program or the instruction is executed by the processor, the steps of the security evaluation method according to any one of claims 15 to 18 are implemented.

49. An application server, comprising a processor and a memory, wherein the memory stores a program or an instruction that can be run on the processor; and when the program or the instruction is executed by the processor, the steps of the security evaluation method according to any one of claims 19 to 23 are implemented.

50. A readable storage medium, wherein the readable storage medium stores a program or an instruction; and when the program or the instruction is executed by a processor, the steps of the security evaluation method according to any one of claims 1 to 14 are implemented, or the steps of the security evaluation method according to any one of claims 15 to 18 are implemented, or the steps of the security evaluation method according to any one of claims 19 to 23 are implemented.

51. An electronic device, wherein the electronic device is configured to perform the steps of the security evaluation method according to any one of claims 1 to 14, or implement the steps of the security evaluation method according to any one of claims 15 to 18, or implement the steps of the security evaluation method according to any one of claims 19 to 23.

52. A chip, comprising a processor and a communication interface, wherein the communication interface is coupled to the processor, and the processor is configured to run a program or an instruction, to implement the steps of the security evaluation method according to any one of claims 1 to 14, or implement the steps of the security evaluation method according to any one of claims 15 to 18, or implement the steps of the security evaluation method according to any one of claims 19 to 23.

53. A computer program product, wherein the computer program product is stored in a non-transient storage medium, and the computer program product is executed by at least one processor, to implement the steps of the security evaluation method according to any one of claims 1 to 14, or implement the steps of the security evaluation method according to any one of claims 15 to 18, or implement the steps of the security evaluation method according to any one of claims 19 to 23.
